# EUROPÄISCHE PATENTANMELDUNG

(11) **EP 2 518 352 A1**
(43) Veröffentlichungstag der Anmeldung: **31.10.2012**
(21) Anmeldenummer: 12165006.3
(22) Anmeldetag: 20.04.2012
(51) Int. Cl.: F16C 33/38

(54) **Linearwälzlager**

(30) Priorität: 29.04.2011 DE 102011017755
(71) Anmelder: Aktiebolaget SKF, 41 550 Göteborg (SE)
(72) Erfinder: Edelmann, Ludwig, 97717 Sulzthal (DE); Hofmann, Joachim, 97456 Dittelbrunn (DE); Jeschka, Erwin, 97711 Maßbach (DE); Kemmer, Martin, 97440 Werneck (DE); Velde, Henryk, 97440 Werneck (DE)
(74) Vertreter: Schonecke, Mitja

(57) **Zusammenfassung**

Ein Ausführungsbeispiel eines Linearwälzlagers (200) umfasst eine Vielzahl von Wälzkörpern (110), wobei wenigstens zwei der Wälzkörper (110) jeweils in einem geschlossenen Rahmen (120) angeordnet sind, und wobei zwischen den zwei Wälzkörpern (110), die jeweils in den Ringen (120) angeordnet sind, höchstens ein Wälzkörper (110) ohne geschlossenen Rahmen angeordnet ist.

## Beschreibung

Ausführungsbeispiele beziehen sich auf einen Halter für einen Wälzkörper eines Linearwälzlagers, ein Linearwälzlager und ein Verfahren zum Bereitstellen eines Linearwälzlagers.

Im Bereich der Linearsysteme werden zur möglichst reibungsarmen Führung zueinander beweglicher Bauteile Linearführung eingesetzt, die je nach verwendetem Arbeitsprinzip in Linearwälzlager und Lineargleitlager unterteilt werden. Linearwälzlager basieren darauf, dass zwischen einem Bauteil und einem entsprechenden Gegenbauteil Wälzkörper abrollen, die mit einer Laufbahn des Bauteils und einer Gegenlaufbahn des Gegenbauteils in Berührung stehen. Als Wälzkörper werden hierbei häufig Kugeln, Zylinder, Nadeln oder Tonnen verwendet.

Linearsysteme sind hierbei nicht auf lineare Bewegungen im mathematischen Sinn, also auf Bewegung entlang einer mathematischen Graden beschränkt. Der Begriff "linear" wird daher in diesem Bereich häufig synonym für den Begriff "translatorisch" verwendet.

Linearwälzlager werden ferner in solche mit einem begrenzten Hub bzw. einer begrenzten Amplitude und solche unterteilt, die im Prinzip eine unendliche, nicht beschränkte Bewegung ermöglichen, wobei im Falle einer konkreten Implementierungen die Amplitude bzw. der Hub des betreffenden Linearwälzlagers durch konstruktive Randbedingungen im Allgemeinen beschränkt ist, wie etwa die Länge einer entsprechenden Laufbahn, Schiene oder Profilschiene.

Diese Einteilung ist unter anderem eine Folge der Tatsache, dass bei Linearwälzlagern sich die Wälzkörper im Allgemeinen mit der Hälfte einer Relativgeschwindigkeit des Bauteils zu dem Gegenbauteil bezüglich beider Bauteile bewegen. Anders ausgedrückt bewegen sich die Wälzkörper sowohl bezüglich des Bauteils als auch bezüglich des Gegenbauteils, sodass eine Rückführung der Wälzkörper in einen Lastbereich des Linearwälzlagers häufig notwendig ist, um eine entsprechende, im Prinzip nicht beschränkte Beweglichkeit entlang einer Bewegungsrichtung des Linearwälzlagers zu ermöglichen. Daher weisen entsprechende Linearwälzlager häufig wenigstens einen Umlenkbereich und einem Rücklaufbereich auf, wobei der Umlenkbereich zwischen dem Lastbereich und dem Rücklaufbereich angeordnet ist, um eine Rückführung der Wälzkörper in dem Lastbereich hinein zu ermöglichen.

Beispiele für Linearwälzlager, die eine im Prinzip nicht beschränkte Amplitude bzw. einen nicht beschränkten Hub aufweisen, sind Profilschienenführungen mit entsprechenden Profilschienenwagen, die auf einer Profilschiene beweglich angeordnet sind. Häufig gibt die Orientierung der Profilschiene bei diesen Systemen die Bewegungsrichtung entlang einer Bewegungslinie an.

Die Klasse der Linearwälzlager umfasst so unter anderem Linearführungen, die nicht an einer Profilschiene, sondern beispielsweise an einer harten Welle ohne explizit ausgeformte Laufbahnen basiert. Sie umfasst jedoch auch Profilschienenführungen mit einem Profilschienenwagen und einer Profilschiene, die ihrerseits wenigstens eine explizit ausgeformte Laufbahn aufweist. Der Begriff "Linearwälzlager" stellt somit einen allgemeinen Begriff dar, der die oben genannten Beispiele umfasst.

Kugeln, aber auch andere Wälzkörper, die in entsprechenden Profilschienenführungen ohne einen Käfig oder Distanzhalter zum Einsatz kommen, tendieren dazu, eine erhöhte Reibung an Stellen aufzuweisen, an denen sich die Wälzkörper berühren. Häufig resultiert dies in erhöhten Betriebsgeräuschen aufgrund einer an den entsprechenden Berührpunkten der benachbarten Wälzkörper gegensinnigen bzw. gegenseitigen Drehrichtung. Ebenso kann es gegebenenfalls zu einem erhöhten Verschleiß kommen. Daher werden bei konventionellen Systemen häufig Kugelketten oder Distanzscheiben ähnliche Zwischenstücke eingesetzt. Dieses Vorgehen kann dazu führen, dass eine Montage eines Linearwälzlagers aufwendig, unflexibel oder fehleranfällig sein kann.

Ausgehend hiervon besteht daher ein Bedarf, eine Montage eines Linearwälzlagers zu vereinfachen, die eine Verringerung der Berührung der Wälzkörper untereinander während des Betriebs des Linearwälzlagers ermöglicht.

Diesen Bedarf wird durch ein Linearwälzlager gemäß Anspruch 1 oder einem Verfahren zum Bereitstellen eines Linearwälzlagers mit Wälzkörpern gemäß Anspruch 9 Rechnung getragen.

Ein Ausführungsbeispiel eines Linearwälzlagers umfasst einer Vielzahl von Wälzkörpern, wobei wenigstens zwei der Wälzkörper jeweils in einem geschlossenen Rahmen angeordnet sind, und wobei zwischen den zwei Wälzkörpern, die jeweils in den geschlossenen Rahmen angeordnet sind, höchstens ein Wälzkörper ohne geschlossenen Rahmen angeordnet ist.

Ein Ausführungsbeispiel eines Verfahren zum Bereitstellen eines Linearwälzlagers mit Wälzkörpern umfasst ein Bereitstellen des Linearwälzlagers, ein Bereitstellen einer Vielzahl von Wälzkörpern, sodass wenigstens zwei der Wälzkörper jeweils in einem geschlossenen Rahmen angeordnet sind, und ein Bestücken des Linearwälzlagers mit den Wälzkörpern, sodass zwischen zwei Wälzkörpern, die jeweils in einem geschlossenen Rahmen angeordnet sind, höchstens ein Wälzkörper ohne geschlossenen Rahmen angeordnet ist.

Einem Ausführungsbeispiel liegt die Erkenntnis zugrunde, dass eine direkte Berührung zweier Wälzkörper dadurch vermieden werden kann, das von einer Vielzahl von Wälzkörpern wenigstens zwei mit einem geschlossenen Rahmen umgeben werden bzw. in einem solchen angeordnet werden und die Wälzkörper dann ihrerseits derart in dem Linearwälzlager angeordnet werden, dass zwischen zwei Wälzkörpern der Vielzahl von Wälzkörpern, die jeweils in einem geschlossenen Rahmen angeordnet sind, höchstens ein Wälzkörper ohne einen entsprechenden geschlossenen Rahmen angeordnet ist. Aufgrund des Vermeidens der direkten Berührung der einzelnen Wälzkörper können so eine Reibung und damit gegebenenfalls ein Verschleiß aufgrund der gegensinnigen Drehrichtung der betreffenden Wälzkörper an einem potenziellen Berührungspunkt reduziert werden. Ebenso kann gegebenenfalls hierdurch eine Geräuschentwicklung während des Betriebs des Linearwälzlagers, das auf ein Berühren der Wälzkörper zurückzuführen ist, reduziert werden. Hierdurch kann gegebenenfalls auch eine Reduzierung von Stößen der Wälzkörper untereinander reduziert werden. Aus diesem Grund werden die geschlossenen Rahmen auch als Trennungskörper oder Wälzkörperrahmen bezeichnet.

Darüber hinaus kann ein Bereitstellen eines Linearwälzlagers gegebenenfalls vereinfacht werden, da die Wälzkörper und die Ringe gegebenenfalls vormontierbar sind.

Bei Ausführungsbeispielen kann es sich bei den Wälzkörpern um Kugeln und bei den geschlossenen Rahmen um Ringe handeln.

Bei einem Linearwälzlager gemäß einem Ausführungsbeispiel ist wenigstens ein Ring oder wenigstens ein geschlossener Rahmen ausgebildet, um einen Wälzkörper drehbar aufzunehmen. Hierdurch kann es möglich sein, einen Verschleiß der Ringe oder geschlossenen Rahmen zu reduzieren, da diese nicht starr mit den Wälzkörpern verbunden sind, sondern sowohl eine Relativbewegung zwischen dem Ring oder dem geschlossenen Rahmen und dem in ihm angeordneten Wälzkörper als auch zu einem benachbarten Wälzkörper möglich ist.

Bei einem Linearwälzlager gemäß einem Ausführungsbeispiel kann wenigstens ein geschlossenen Rahmen an einer Innenseite eine Form aufweisen, um einen Wälzkörper drehbar zu halten. Anders ausgedrückt kann ein geschlossenen Rahmen ausgebildet sein, um einen Wälzkörper gegen ein Herausfallen zusichern. Hierdurch kann es gegebenenfalls möglich sein, eine Montage bzw. ein Bereitstellen eines Linearwälzlagers weiter zu vereinfachen, da die Wälzkörper und die zugehörigen geschlossenen Rahmen in einem vormontierten Zustand leichter handhabbar werden.

Ein Linearwälzlager gemäß einem Ausführungsbeispiel kann ferner einen Lastbereich umfassen, in dem die Vielzahl von Wälzkörpern angeordnet ist, und der ausgebildet ist, um die Wälzkörper zusammen mit den geschlossenen Rahmen aufzunehmen. Hierdurch kann es möglich sein, eine Betriebssicherheit zu erhöhen, da ein Einklemmen von verrutschenden Distanzstücken zwischen einer Laufbahn und einem Wälzkörper während des Betriebs des Linearwälzlagers vermeidbar sein kann.

Ein solches Linearwälzlager gemäß einem Ausführungsbeispiel kann ferner einen Umlenkbereich und einen Rücklaufbereich aufweisen, wobei der Umlenkbereich zwischen dem Rücklaufbereich und dem Lastbereich angeordnet ist. Der Umlenkbereich und der Rücklaufbereich können hierbei ausgebildet sein, um die Wälzkörper zusammen mit den geschlossenen Rahmen aufzunehmen, wobei die Ringe in einer Führungsausnehmung wenigstens teilweise geführt werden. Hierdurch kann es möglich sein, die Wälzkörper, die in einem Ring angeordnet sind, in einer definierten Orientierung in den Lastbereich einzubringen, um so eine Betriebssicherheit des Linearwälzlagers zu verbessern und eine Gefahr falsch orientierter geschlossenen Rahmen zu reduzieren, die gegebenenfalls zu einem Blockieren oder einer anderen Funktionsstörung des Linearwälzlagers führen könnten.

Bei einem Linearwälzlager gemäß einem Ausführungsbeispiel können wenigstens 40 % der Wälzkörper der Vielzahl von Wälzkörpern in jeweils einem geschlossenen Rahmen angeordnet sein. Hierdurch kann es gegebenenfalls möglich sein, eine Reduzierung der Reibung (Reibungsreduzierung) und/oder eine Geräuschreduzierung zu verbessern, indem möglichst viele Wälzkörper in der zuvor beschriebenen Anordnung mit höchstens einem Wälzkörper zwischen zwei Wälzkörpern mit Ringen eingesetzt werden. Bei weiteren Ausführungsbeispielen können auch wenigstens 45 %, wenigstens 49 % oder wenigstens 50 % der Wälzkörper jeweils in einem Ring angeordnet sein.

Bei solchen Linearwälzlagern kann der Lastbereich ein Rückhalteelement aufweisen, welches ausgebildet ist, um ein Herausfallen der Wälzkörper in einer zu einer Laufbahn des Lastbereichs senkrechten Richtung zu unterbinden. Hierdurch kann es möglich sein, eine Montage bzw. ein Bereitstellen des Linearwälzlagers weiter zu vereinfachen, da ein Herausfallen der Wälzkörper auch im Falle eines vergleichsweise offenliegenden Lastbereichs reduziert wird bzw. vollständig verhindert wird.

Bei einem Linearwälzlager gemäß einem Ausführungsbeispiel kann die Zahl der Wälzkörper, die jeweils in einem geschlossenen Rahmen angeordnet sind, höchstens 75 %, höchstens 60 % oder höchstens 55 % der Wälzkörper betragen. Hierdurch kann es möglich sein, einen durch die geschlossenen Rahmen entstehen den zusätzlichen Platzbedarf in dem Lastbereich, der zu einer Reduzierung der Belastbarkeit des Linearwälzlagers führen könnte, zu begrenzen.

Ein Linearwälzlager gemäß einem Ausführungsbeispiel kann als Profilschienenwagen ausgeführt sein oder einen solchen umfassen.

Bei einem Linearwälzlager gemäß einem Ausführungsbeispiel, bei dem die geschlossenen Rahmen als Ringe und die Wälzkörper als Kugeln ausgeführt sind, kann wenigstens ein Ring einen Außenradius aufweisen, der höchstens ein 2-fachen Radius des Wälzkörpers in einer Ebene senkrecht zu einer Rotationsachse des Wälzkörpers aufweist. Hierdurch kann es möglich sein, einen zusätzlichen Raumbedarf in dem Lastbereich, der durch die Ringe entsteht, zu reduzieren, um so eine Anzahl von Wälzkörpern in dem Lastbereich möglichst groß wählen zu können, um eine Belastbarkeit des Linearwälzlagers entsprechend zu erhöhen. Bei anderen Ausführungsbeispielen kann der Außendurchmesser des wenigstens einen Rings ein 1.5-faches, ein 1.2-faches, ein 1.1-faches oder ein 1.05-faches des Radius des Wälzkörpers nicht übersteigen. Bei weiteren Ausführungsbeispielen kann auch eine Mehrzahl der Ringe oder alle Ringe entsprechend ausgeführt sein.

Bei einem Linearwälzlager gemäß einem Ausführungsbeispiel kann ein Ring oder geschlossener Rahmen beispielsweise einen Kunststoff, ein zähes Material, ein biegewechselfestes Material, Polyoxymethylen (POM) oder Polyamide (PA) aufweisen oder vollständig aus diesem gefertigt sein. So kann es sich bei einem solchen Ring oder geschlossenen Rahmen beispielsweise um ein Kunststoffteil handeln. Hierdurch kann es möglich sein, die Ringe oder geschlossenen Rahmen gegebenenfalls mit einem einfachen und damit kostengünstigen Verfahren herzustellen.

Wenn zuvor wenigstens von einem Ring oder von wenigstens einem geschlossenen Rahmen gesprochen wurde, so schließt dies selbstverständlich die Möglichkeit ein, mehr als nur einen Ring oder geschlossenen Rahmen entsprechend auszugestalten. So kann eine Mehrzahl, eine Vielzahl, eine bestimmte Anzahl aller Ringe oder geschlossener Rahmen (z.B. 30%, 40%, 50%, 60% oder 70%) oder alle Ringe oder geschlossenen Rahmen entsprechend ausgeführt, ausgestaltet oder eingesetzt werden.

Ein Ausführungsbeispiel eines Verfahrens zum Bereitstellen eines Linearwälzlagers mit Wälzkörpern kann so zu einer einfacheren und damit kostengünstigeren Montage führen. Bei einem Ausführungsbeispiel kann das Bereitstellen des Linearwälzlagers ein Bereitstellen eines Lastbereichs umfassen, wobei in dem Lastbereich die Vielzahl von Wälzkörpern angeordnet werden kann, und wobei Lastbereich ausgebildet ist, um die Wälzkörper zusammen mit den geschlossenen Rahmen aufzunehmen. Hierdurch kann gegebenenfalls eine Montage vereinfacht werden und andererseits gegebenenfalls eine Betriebssicherheit des Linearwälzlagers erhöht werden, wie dies zuvor dargestellt wurde.

Nachfolgend werden unter Bezugnahme auf die Figuren 1 bis 3 Ausführungsbeispiele hinsichtlich ihres Aufbaus und ihrer Funktionsweise näher beschrieben.
Fig. 1 zeigt eine perspektivische Darstellung einer Anordnung von Wälzkörpern eines Linearwälzlagers gemäß einem Ausführungsbeispiel;
Fig. 2 zeigt eine Explosionsdarstellung eines Linearwälzlagers gemäß einem Ausführungsbeispiel; und
Fig. 3 zeigt eine vergrößerte Darstellung eines Rückführungsrohrs aus Figur 2.

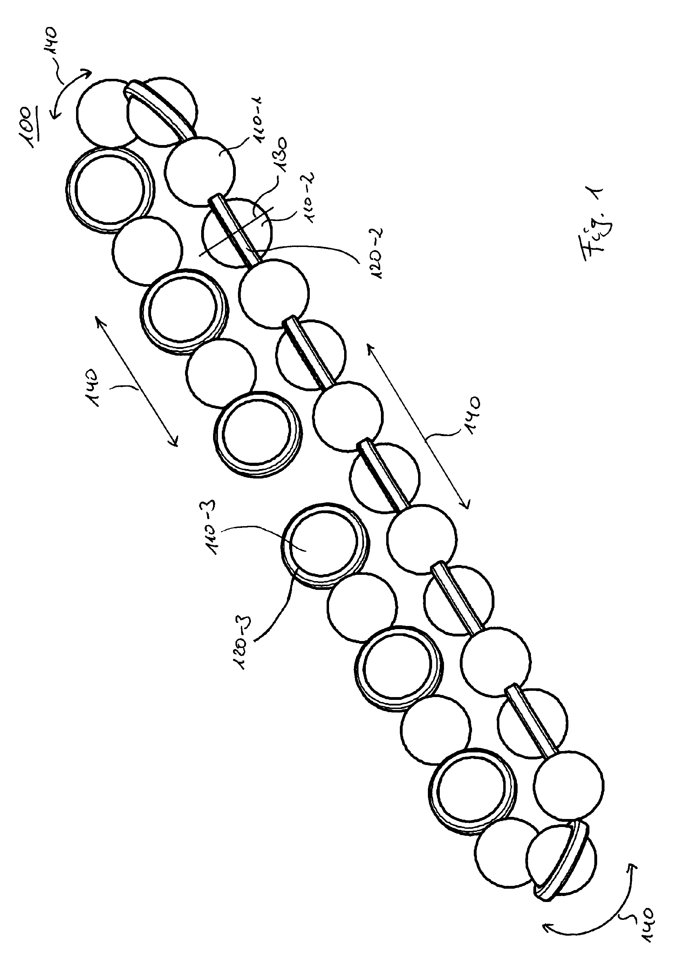

Bevor im Zusammenhang mit den Figuren 1 bis 3 Ausführungsbeispiele näher beschrieben und hinsichtlich ihrer Funktionsweise näher erläutert werden, bietet es sich an darauf hinzuweisen, dass im Rahmen der vorliegenden Beschreibung zusammenfassende Bezugszeichen für Objekte, Strukturen und andere Entitäten verwendet werden, wenn auf die betreffende Entität an sich, mehrerer entsprechende Entitäten innerhalb eines Ausführungsbeispiels oder innerhalb mehrerer Ausführungsbeispiele oder die betreffende Gattung von Entitäten näher eingegangen wird. Hierdurch ist es möglich, die Beschreibung knapper und kürzer zu halten, da unnötige Wiederholungen vermieden werden können, da Beschreibungen die sich auf eine Entität beziehen, auch auf andere Entitäten in anderen Ausführungsbeispielen übertragbar sind, soweit dies nicht explizit anders angegeben ist oder sich aus dem Zusammenhang ergibt. Im Unterschied hierzu werden, wenn einzelne Entitäten bezeichnet werden, individuelle Bezugszeichen verwendet, die auf den entsprechenden zusammenfassenden Bezugszeichen basieren. Entitäten, die mehrfach in einem Ausführungsbeispiel oder in unterschiedlichen Ausführungsbeispielen auftreten, können hierbei bezüglich einiger ihrer technischen Parameter identisch und/oder unterschiedlich ausgeführt werden. Es ist so beispielsweise möglich, dass mehrere Entitäten innerhalb eines Ausführungsbeispiels bezüglich eines Parameters identisch, bezüglich eines anderen Parameters jedoch unterschiedlich ausgeführt sein können.

Im Folgenden werden Ausführungsbeispiele beschrieben und erläutert, die als Wälzkörper Kugeln verwenden. In einem solchen Fall können die geschlossenen Rahmen beispielsweise als Ringe ausgestaltet werden. Die geschlossenen Rahmen können aber auch in anderer Form ausgeführt werden, etwa mit einer rechteckigen oder polygonalen Außenform. So sind die im Folgenden gemachten Ausführungen nicht auf Ringe beschränkt, soweit dies nicht explizit oder implizit ausgeschlossen ist.

Fig. 1 zeigt eine Anordnung 100 von Wälzkörpern 110, bei denen es sich in dem dargestellten Fall um kugelförmige Wälzkörper, also um Kugeln handelt. Wenigstens zwei der Wälzkörper 110 (beispielsweise Wälzkörper 110-2 und 110-3) sind in einem ringförmigen geschlossenen Rahmen 120, der im Folgenden als "Ring 120 bezeichnet wird, angeordnet. Hierbei zeigt Fig. 1 einmal einen Ring 120 in einer seitlichen Darstellung im Falle des Rings 120-2 des Wälzkörpers 110-2 und einmal in einer Aufsicht im Falle des Rings 120-3 des Wälzkörpers 110-3. Ein Ring gemäß einem Ausführungsbeispiel weist hierbei eine im Wesentlichen hohlzylindrische Form mit einem Innenradius und einem Außenradius sowie einer Höhe des Hohlzylinders entlang einer Zylinderachse 130 auf. Der Ring 120 ist hierbei im Wesentlichen rotationssymmetrisch zu der Zylinderachse 130.

Ein Ring 120 gemäß einem Ausführungsbeispiel kann jedoch eine von der Hohlzylinderform geringfügig abweichende Form aufweisen, wenn beispielsweise der Ring an einer Innenfläche eine Struktur aufweist, sodass der Ring 120 ausgebildet ist, um den Wälzkörper drehbar aufzunehmen. Zu diesem Zweck kann ein Ring 120 beispielsweise eine kalottenförmige oder eine andere abschnittsweise sphärische Form aufweisen, sodass der Wälzkörper 110 einerseits in dem Ring 120 drehbar gehalten wird, jedoch im Falle einer Bewegung des Wälzkörpers 110 entlang der Rotationsachse des Hohlzylinders aufgrund der Form der Innenseite des Rings 120 an einem Verlassen des Rings 120 gehindert wird. Anders ausgedrückt kann der Ring 120 an einer Innenseite derart ausgeformt sein, dass aufgrund einer formschlüssigen Verbindung der Wälzkörper 110 an einem Verlassenen des Rings 120 bzw. an einem Herausfallen gehindert wird.

Dies kann nicht nur durch die beschriebene kalottenförmige bzw. abschnittsweise sphärische Form erzielt werden, sondern ebenfalls durch eine andere Form, welche die zuvor genannte formschlüssige Verbindung zumindest zeitweise ermöglicht. So kann beispielsweise auch durch eine entsprechende Ringstruktur bzw. Zylinderstruktur an der Innenseite des Rings 120 eine solche formschlüssige Verbindung gegebenenfalls realisiert werden. Auch andere Formen geschlossener Rahmen können eine entsprechend ausgeformte Innenfläche aufweisen.

Ein Ring 120 gemäß einem Ausführungsbeispiel kann darüber hinaus auch in einer Außenseite eine entsprechende von einer strikten Hohlzylinderform abweichende Form aufweisen. So kann er beispielsweise auch in diesem Bereich eine abschnittsweise sphärische Form oder eine andere Form aufweisen, die gegebenenfalls eine Reibung und damit einen Verschleiß bezüglich eines benachbarten Wälzkörpers reduziert.

Entsprechendes gilt ebenso für anders geformte geschlossene Rahmen.

Ein Ring 120 gemäß einem Ausführungsbeispiel weist hierbei ein Verhältnis des Außenradius des Rings 120 zu einem Radius des Wälzkörpers 110 bezüglich seiner Rotationsachse bzw. Symmetrieachse auf, die ein Wälzkörper stets aufweist, um ein entsprechendes Abrollen überhaupt zu ermöglichen, das einen Wert von 2, von 1.5 von 1.2, von 1.1 oder von 1.05 nicht übersteigt. Durch eine entsprechende Beschränkung des Außendurchmessers des Rings 120 kann ein Platzbedarf, der durch die bloße Anwesenheit des Rings 120 vorhanden ist, gegebenenfalls reduziert werden, sodass eine Zahl von Wälzkörpern in dem Lastbereich des Linearwälzlagers gegebenenfalls erhöht werden kann, wenn der Außendurchmesser des Rings 120 reduziert wird. Dies kann gegebenenfalls zu einer Erhöhung der Belastbarkeit des betreffenden Linearwälzlagers führen, da eine Last auf mehr Wälzkörper 110 verteilt wird.

Andererseits kann jedoch auch bei einer Verringerung des Außendurchmessers, die gegebenenfalls mit einer entsprechenden Verringerung des Innendurchmessers einhergehen kann, der jedoch immer größer als ein entsprechender Durchmesser des Wälzkörpers 110 ist, eine Reduzierung der mechanischen Stabilität des Rings 120 einhergehen, die eine Führungseigenschaft und damit gegebenenfalls eine Funktionssicherheit des Linearwälzlagers negativ beeinflussen könnte.

Wird ein Ring 120 oder ein anderer geschlossener Rahmen gemäß einem Ausführungsbeispiel derart ausgeführt, dass dieser den Wälzkörper drehbar halten kann, kann es gegebenenfalls sinnvoll sein, diesen aus einem elastischen Material zu fertigen, sodass der Ring 120 oder der geschlossene Rahmen auf den Wälzkörper aufgeklickt oder durch eine kurzzeitige mechanische Verformung des Rings 120 oder des geschlossenen Rahmens aufgebracht werden kann. Anders ausgedrückt kann es ratsam sein, in einem solchen Fall ein wenigstens zeitweise elastisches Material für den Ring 120 oder den geschlossene Rahmen zu verwenden.

So kann es gegebenenfalls ratsam sein, den oder die Ringe 120 oder die geschlossenen Rahmen aus einem Material zu fertigen, welches einen Kunststoff, ein zähes Material, ein biegewechselfestes Material, Polyoxymethylen (POM) oder Polyamide (PA) aufweist.

Die Anordnung 100 der Wälzkörper 110, wie sie in Fig. 1 gezeigt ist, illustriert darüber hinaus, dass bei Ausführungsbeispielen eines Linearwälzlagers es sinnvoll sein kann, wenigstens 40% der Wälzkörper mit einem entsprechenden geschlossenen Rahmen 120 auszurüsten. Hierdurch ist es möglich, eine Anzahl benachbarter Wälzkörper 110, die nicht durch einen geschlossenen Rahmen 120 voneinander räumlich beabstandet sind, zu reduzieren oder diese sogar vollständig zu vermeiden. Hierdurch kann eine weitere Geräuschreduzierung gegenüber einer nur teilweise Bestückung der Wälzkörper 110 mit entsprechenden geschlossenen Rahmen 120 gegebenenfalls erzielt werden.

Es kann gegebenenfalls auch eine verbesserte Reibungsreduzierung, eine Verschleißreduzierung und/oder eine Geräuschreduzierung im Vergleich zu einem Ausführungsbeispiel realisiert werden, bei dem eine geringere Anzahl von Wälzkörpern 110 mit einem entsprechenden geschlossenen Rahmen bestückt ist. Auch kann gegebenenfalls eine Stoßdämpfung bezüglich benachbarter Wälzkörper realisiert oder verbessert werden. Bei anderen Ausführungsbeispielen kann eine entsprechende Anzahl von Wälzkörpern, die mit einem geschlossenen Rahmen 120 umgeben ist bzw. in solchen angeordnet sind, auch wenigstens 45%, wenigstens 49% oder wenigstens 50% betragen.

Um jedoch den zuvor beschriebenen zusätzlichen Platzbedarf aufgrund der geschlossenen Rahmen 120 zu reduzieren, kann es bei manchen Ausführungsbeispielen ratsam sein, die Anzahl der geschlossenen Rahmen auf maximal 75%, auf maximal 60% oder maximal 55% der Wälzkörper 110 zu beschränken. Hierdurch kann gegebenenfalls eine Belastbarkeit des Linearwälzlagers erhöht werden, da gegebenenfalls in dem Lastbereich des Linearwälzlagers mehr Wälzkörper 110 einbringbar sind.

Anders ausgedrückt zeigt Fig. 1 eine Anordnung von Wälzkörpern 100 gemäß einem Ausführungsbeispiel eines Linearwälzlagers, bei der ein Ring 120 im Grunde um jede zweite Kugel 110 aufgebracht ist, um eine direkte Berührung der einzelnen, benachbarten Kugeln bzw. Wälzkörper zu vermeiden. Dies gilt nicht nur für kugelförmige Wälzkörper, sondern auch für andere Wälzkörperformen.

Hierbei werden im Rahmen der vorliegenden Beschreibung unter benachbarten Entitäten solche verstanden, in die bezüglich einer Richtung oder Linie, beispielsweise bezüglich einer Bewegungslinie 140, die sich entlang einer Bewegungsrichtung der Wälzkörper 110 erstreckt und in Fig. 1 entsprechend eingezeichnet ist, angeordnet sind, wobei zwischen zwei benachbarten Entitäten, also beispielsweise zwischen zwei benachbarten Wälzkörpern 110 (beispielsweise Wälzkörper 110-1 und 110-2) keine weitere Entität der gleichen Gattung bzw. des gleichen Typs angeordnet ist. Hierbei kann jedoch zwischen den betreffenden Entitäten eine andere Struktur, also insbesondere ein Ring 120 angeordnet sein.

So können bei Ausführungsbeispielen durchaus Wälzkörper 110, die in einem geschlossenen Rahmen 120 angeordnet sind, benachbart zueinander entlang einer Bewegungslinie 140 angeordnet sein, wie dies Fig. 1 aufzeigt. Die Bewegungslinie 140 verläuft hierbei entlang einer möglichen Bewegung der Wälzkörper 110, wenn diese in einem Linearwälzlager eingebaut sind und eine entsprechende Bewegung vermitteln. Die Bewegungslinie 140 verläuft daher im Allgemeinen im Lastbereich im Wesentlichen entlang einer Geraden, während sie in den Umlenkbereichen des Linearwälzlagers eine gebogene bzw. gekrümmte Form aufweist. Typischerweise weist die Bewegungslinie 140 auch in dem Rücklaufbereich eine entsprechende gerade Form auf.

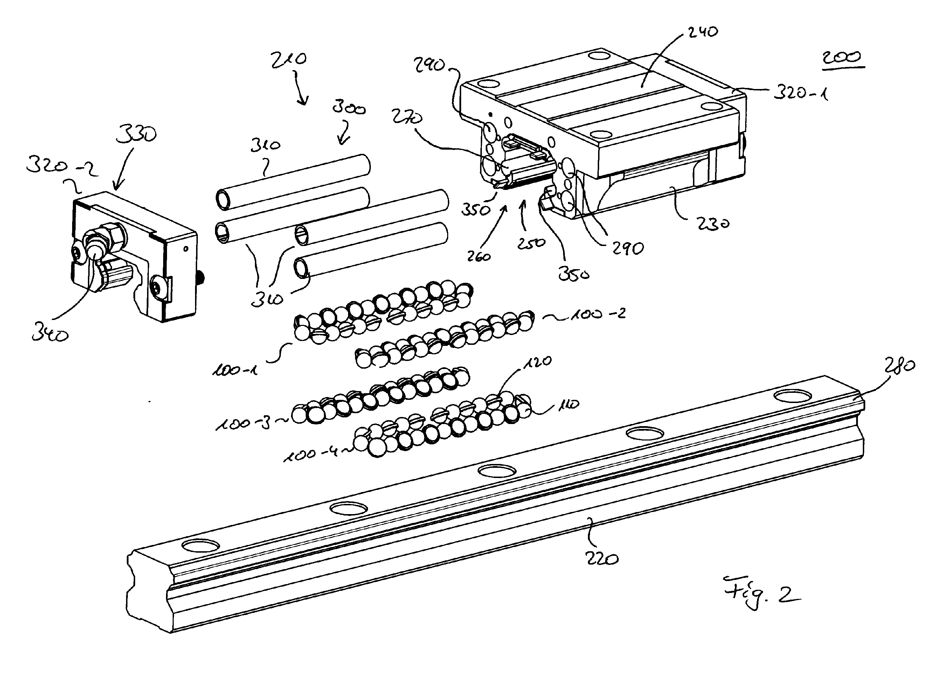

Fig. 2 zeigt eine Explosionsdarstellung eines Linearwälzlagers in Form einer Profilschienenführung gemäß einem Ausführungsbeispiel. Das Linearwälzlager 200 umfasst so einen Profilschienenwagen 210 und einer Profilschiene 220. Der Profilschienenwagen 210 weist einen Führungswagen 230 auf, der eine Montagefläche 240 umfasst, die bei dem in Fig. 2 gezeigten Ausführungsbeispiel vier Bohrungen sowie zwei Nuten aufweist, um Maschinenteile oder andere Bauelemente mit dem Führungswagen 230 mechanisch verbindbar zu machen. Die Bohrungen können beispielsweise als Gewindebohrungen ausgeführt sein, um ein Verschrauben der zuvor genannten Maschinenteile mit dem Führungswagen 230 zu ermöglichen. Bei den Nuten handelt sich gegebenenfalls um unbearbeitete Flächen. Die Größe der Anschraubfläche wird durch die Nuten reduziert, so dass dadurch gegebenenfalls eine bessere Qualität bzw. höhere Maßgenauigkeit erreicht werden kann.

Der Führungswagen 230 weist eine zentrale Ausnehmung 250 auf, die im Wesentlichen U-förmig ausgeführt ist, und mit welcher der Führungswagen 230 und damit der Profilschienenwagen 210 die Profilschiene 220 im Wesentlichen U-förmig umgreift.

Ein Lastbereich 260 des Linearwälzlagers 200 gemäß einem Ausführungsbeispiel ist in dem Bereich der zentralen Ausnehmung 250 angeordnet und umfasst wenigstens eine Laufbahn 270 für die Wälzkörper 110. Die Profilschiene 220 weist wenigstens eine entsprechende Gegenlaufbahn 280 auf, wobei die in Fig. 2 mit dem Bezugszeichen 280 bezeichnete Gegenlaufbahn nicht die der mit dem Bezugszeichen 270 bezeichneten Laufbahn zugeordneten Laufbahn ist. So handelt es sich bei dem in Fig. 2 gezeigten Linearwälzlagers um ein vierreihiges Linearwälzlager, das insgesamt vier Laufbahnen 270 und vier Gegenlaufbahnen 280 umfasst.

Wie bereits eingangs beschrieben wurde, bewegen sich die Wälzkörper 110 während des Betriebs zwischen der Laufbahn 270 und der Gegenlaufbahn 280 derart, dass die Wälzkörper 110 sowohl an der Laufbahn 270 auf einer Gegenlaufbahn 280 abrollen. Die Wälzkörper 110 sind hierbei entsprechend vier Anordnungen 100 von Wälzkörpern 110 angeordnet, wie sie im Zusammenhang mit Fig. 1 beschrieben wurden.

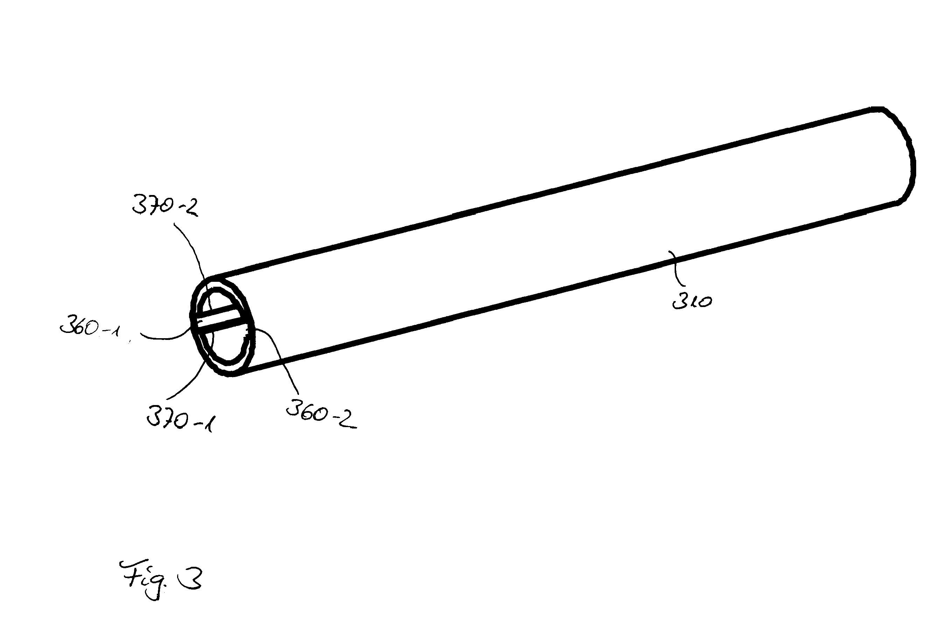

Der Führungswagen 230 weist entsprechend vier Bohrungen 290 auf, die Teil eines Rücklaufbereichs 300 für die Wälzkörper 110 sind. Die Bohrungen 290 sind hierbei derart ausgeführt, dass sie jeweils ein Führungsrohr 310 aufnehmen können, welches im Zusammenhang mit Fig. 3 noch näher beschrieben wird. In dem Führungsrohr 310, welches ebenfalls Teil des Rücklaufbereichs 300 ist, werden in die Wälzkörper 110 zusammen mit den entsprechenden Ringen 120 bzw. geschlossenen Rahmen zurückgeführt.

Der Profilschienenwagen 210 weist ferner zwei Endplatten 320-1 und 320-2 auf, welche mit jeweils einer Stirnseite des Führungswagens 230 verschraubt sind. Die Endplatten 320, die beispielsweise einen verstärkten Kunststoff (POM) aufweisen können, umfassen unter anderem einen Umlenkbereich 330 für die Wälzkörper 110 und sind entsprechend zwischen dem Lastbereich 250 und dem Rücklaufbereich bzw. der Führungsrohre 310 angeordnet. Neben der Aufnahme des Umlenkbereichs 330 können optional die Endplatten 320 ferner einer Schmierung der Wälzkörper 110 bzw. einer Schmierung der Laufbahnen 270, 280 des Linearwälzlagers 200 dienen. Zu diesem Zweck können die Endplatten 320 ferner ein Schmiermittelreservoir aufweisen, welches sich beispielsweise über einen Schmiermittelnippel 340 mit dem entsprechenden Schmiermittel befüllen lässt.

Darüber hinaus können die Endplatten 320 optional weitere Dichtelemente bzw. Abstreifelemente umfassen, die einer Abdichtung des Profilschienenwagens zu der Profilschiene 220 dienen.

Das in Fig. 2 gezeigte Ausführungsbeispiel eines Linearwälzlagers 200 umfasst ferner für jede der Anordnungen 100 von Wälzkörpern 110, die auch als Reihen von Wälzkörpern bezeichnet werden, ein Rückhalteelement 350, welches ausgebildet ist, um ein Herausfallen von Wälzkörpern 110 aus dem Lastbereich 260 zu unterbinden. Anders ausgedrückt sind die Rückhalteelemente 350 ausgebildet, um ein Herausfallen der Wälzkörper 110 in einer Richtung senkrecht zu der entsprechenden Laufbahn 270 zu unterbinden. Ein solches Rückhalteelement 350 kann beispielsweise als ein anschraubbares oder anderweitig befestigbares Profilbauteil ausgebildet sein, welches die entsprechende Laufbahn 270 hinsichtlich einer Form entsprechend ergänzt. Ein solches Rückhalteelement kann beispielsweise eine Form der entsprechenden Laufbahn im Querschnitt fortsetzen oder fortführen, sodass an dem Profilschienenwagen 210 im Bereich der Laufbahn 270 eine Öffnung resultiert, die kleiner als ein Durchmesser oder eine andere Abmessung der Wälzkörper ist, sodass ein Herausfallen der Wälzkörper in dieser Richtung zumindest nicht mehr möglich ist.

Ein Ausführungsbeispiel eines Linearwälzlagers 200 kann jedoch auch anders ausgeführt sein, als dies in Fig. 2 dargestellt ist. So kann selbstverständlich ein Linearwälzlager mit einer größeren oder einer geringeren Anzahl von Wälzlagerreihen bzw. entsprechender Anordnungen 100 bestückt sein. Ebenso können der Lastbereich 260, der Rücklaufbereich 300 sowie der Umlenkbereich 330 im Falle eines unendlichen Linearwälzlagers anders implementiert werden. So kann gegebenenfalls eine Implementierung mittels Endplatten 320 teilweise oder vollständig anders ausgeführt werden. Selbstverständlich sind auch andere optionale Komponenten, etwa eine Integration eines Schmiermittelreservoirs aus nicht zwingend.

Fig. 3 zeigt ein Führungsrohr 310, wie es im Bereich des Rücklaufbereichs 300 zum Einsatz kommt. Das Führungsrohr 310 ist als ein hohlzylindrischer Grundkörper gefertigt, der einen Innendurchmesser aufweist, der sich an dem Durchmesser der Wälzkörper derart orientiert, dass diese das Führungsrohr 310 passieren können. Darüber hinaus weist das Führungsrohr 310 eine erste und eine zweite Führungsausnehmung 360-1 und 360-2 auf, die in Form von Nuten ausgeführt sind, die einander gegenüberliegen. Die Führungsausnehmung 360 sind hierbei derart ausgeführt, dass die Ringe 120 der Wälzkörper 110 jeweils mit einem Abschnitt in einem Polbereich in die Führungsausnehmungen 360 eingreifen können und über Führungsseitenflächen 370-1 und 370-2 geführt werden. Die Führungsseitenflächen 370-1 und 370-2 erstrecken sich hierbei wenigstens in einem Abschnitt des Rücklaufbereichs 300 parallel.

Entsprechend greifen auch Abschnitte des Rings 120 in den Umlenkbereichen 330 in Führungsausnehmungen ein, und werden durch entsprechende Führungsseitenflächen auch dort geführt.

Bei anders geformten Wälzkörpern können gegebenenfalls die Führungsrohre anders ausgeführt sein.

Wie bereits zuvor beschrieben wurde, können Ausführungsbeispiele der vorliegenden Erfindung auch in anderen Formen implementiert wurden. Grundsätzlich sind sie daher nicht auf Profilschienenführungen beschränkt, sondern können vielmehr in Form unterschiedlichster Linearsysteme umgesetzt werden. Das in den Figuren 1 bis 3 gezeigte Ausführungsbeispiel eines Linearwälzlagers verwendet Distanzringe für die Kugelführung bei der Profilschienenführung. Neben der bereits zuvor beschriebenen Möglichkeit einer Reduzierung der Reibung, des Verschleißes und des Geräuschs während des Betriebs können Ausführungsbeispiele auch eine kostengünstigere Herstellung aufgrund einer einfacheren Bereitstellung bzw. Montage des Linearwälzlagers ermöglichen. Diese einfachere Bereitstellung eines Linearwälzlagers gemäß einem Ausführungsbeispiel kann so zu einer insgesamt kostengünstigeren Herstellung führen.

Die geschlossenen Rahmen bei Ausführungsbeispielen können auch in anderen Formen als in der gezeigten Ringform ausgeführt sein. So kann beispielsweise bei anders ausgeformten Wälzkörpern eine entsprechende Anpassung der Form der geschlossenen Rahmen ratsam sein. Im Falle von tonnenförmigen Wälzkörpern kann beispielsweise eine rechteckige oder polygonale Form zum Einsatz kommen. Daher werden die geschlossenen Rahmen auch allgemein als Trennungskörper oder Wälzkörperrahmen bezeichnet.

Ein Ausführungsbeispiel eines Verfahrens zum Bereitstellen eines Linearwälzlagers umfasst ein Bereitstellen des Linearwälzlagers 200 selbst, sowie ein Bereitstellen einer Vielzahl von Wälzkörpern 110, sodass wenigstens zwei der Wälzkörper jeweils in einem geschlossenen Rahmen120 angeordnet sind. Das Verfahren umfasst ferner ein Bestücken des Linearwälzlagers 200 mit den Wälzkörpern 110, sodass zwischen zwei Wälzkörpern 110, die jeweils in einem geschlossenen Rahmen120 angeordnet sind, höchstens ein Wälzkörper 110 ohne geschlossenen Rahmen angeordnet ist. Ausführungsbeispiele können auch weitere Schritte bzw. weitere Teilschritte umfassen. So kann beispielsweise das Bereitstellen des Linearwälzlagers 200 auch ein Bereitstellen eines Lastbereichs 260 umfassen. Entsprechend kann auch das Bestücken des Linearwälzlagers mit den Wälzkörpern ein Bestücken derart umfassen, dass die Vielzahl von Wälzkörpern in dem Lastbereich 260 angeordnet ist, wobei der Lastbereich 260 ausgebildet ist, um die Wälzkörper 110 zusammen mit den geschlossenen Rahmen 120 aufzunehmen.

Alternativ oder ergänzend können bei Ausführungsbeispielen eines Verfahrens zum Bereitstellen eines Linearwälzlagers weitere Verfahrensschritte oder Verfahrens Unterschritte hinzutreten, die zuvor genannte Strukturen oder Entitäten bereitstellen oder schaffen.

### Bezugszeichenliste

- 100: Anordnung von Wälzkörpern
- 110: Wälzkörper
- 120: Ring
- 130: Zylinderachse
- 140: Bewegungslinie
- 200: Linearwälzlagern
- 210: Profilschienenwagen
- 220: Profilschiene
- 230: Führungswagen
- 240: Montagefläche
- 250: zentrale Ausnehmung
- 260: Lastbereich
- 270: Laufbahn
- 280: Gegenlaufbahn
- 290: Bohrung
- 300: Rücklaufbereich
- 310: Führungsrohr
- 320: Endplatte
- 330: Umlenkbereich
- 340: Schmiermittelnippel
- 350: Rückhalteelement
- 360: Führungsausnehmung
- 370: Führungsseitenfläche

## Patentansprüche

1. Linearwälzlager (200) mit folgenden Merkmalen:
einer Vielzahl von Wälzkörpern (110),
wobei wenigstens zwei der Wälzkörper (110) jeweils in einem geschlossenen Rahmen (120) angeordnet sind; und
wobei zwischen den zwei Wälzkörpern (110), die jeweils in den geschlossenen Rahmen (120) angeordnet sind, höchstens ein Wälzkörper (110) ohne geschlossenen Rahmen angeordnet ist.

2. Linearwälzlager (200) nach Anspruch 1, bei dem die geschlossenen Rahmen (120) Ringe und die Wälzkörper Kugeln sind.

3. Linearwälzlager (200) nach einem der vorhergehenden Ansprüche, bei dem wenigstens ein geschlossenen Rahmen (120) an einer Innenseite eine Form aufweist, um einen Wälzkörper (120) drehbar zu halten.

4. Linearwälzlager (200) nach einem der vorhergehenden Ansprüche, das ferner einen Lastbereich (260) umfasst, in dem die Vielzahl von Wälzkörpern (110) angeordnet ist, und der ausgebildet ist, um die Wälzkörper (110) zusammen mit den geschlossenen Rahmen (120) aufzunehmen.

5. Linearwälzlager (200) nach Anspruch 4, das ferner einen Umlenkbereich (330) und einen Rücklaufbereich (300) aufweist, wobei der Umlenkbereich (330) zwischen dem Rücklaufbereich (300) und dem Lastbereich (260) angeordnet ist, und wobei der Umlenkbereich (330) und der Rücklaufbereich (300) ausgebildet sind, um die Wälzkörper (110) zusammen mit den geschlossenen Rahmen (120) aufzunehmen, wobei die geschlossenen Rahmen (120) in einer Führungsausnehmung (360) wenigstens teilweise geführt werden.

6. Linearwälzlager (200) nach einem der Ansprüche 4 oder 5, bei dem der Lastbereich (260) ein Rückhalteelement (350) aufweist, das ausgebildet ist, um ein Herausfallen der Wälzkörper (110) in einer zu einer Laufbahn (270) des Lastbereichs (260) senkrechten Richtung zu unterbinden.

7. Linearwälzlager (200) nach einem der vorhergehenden Ansprüche, bei dem wenigstens 40% der Wälzkörper (110) der Vielzahl von Wälzkörpern jeweils in einem geschlossenen Rahmen (120) angeordnet sind.

8. Linearwälzlager (200) nach einem der vorhergehenden Ansprüche, bei dem das Linearwälzlager einen Profilschienenwagen (210) umfasst.

9. Verfahren zum Bereitstellen eines Linearwälzlagers (200) mit Wälzkörpern (110), umfassend:
Bereitstellen des Linearwälzlagers (200);
Bereitstellen einer Vielzahl von Wälzkörpern (110), sodass wenigstens zwei der Wälzkörper (110) jeweils in einem geschlossenen Rahmen (120) angeordnet sind;
Bestücken des Linearwälzlagers (200) mit den Wälzkörpern (110), sodass zwischen zwei Wälzkörpern (110), die jeweils in einem geschlossenen Rahmen (120) angeordnet sind, höchstens ein Wälzkörper (110) ohne geschlossenen Rahmen angeordnet ist.

10. Verfahren zum Bereitstellen eines Linearwälzlagers (200) mit Wälzkörpern (110) nach Anspruch 9, bei dem das Bereitstellen des Linearwälzlagers (200) ein Bereitstellen eines Lastbereichs (260) umfasst, wobei in dem Lastbereich (260) die Vielzahl von Wälzkörpern (110) angeordnet werden kann, und wobei Lastbereich (260) ausgebildet ist, um die Wälzkörper (110) zusammen mit den geschlossenen Rahmen (120) aufzunehmen.
